# EUROPÄISCHE PATENTSCHRIFT

(11) **EP 0 638 017 B1**
(45) Veröffentlichungstag und Bekanntmachung des Hinweises auf die Patenterteilung: **09.04.1997**
(21) Anmeldenummer: 93908784.7
(22) Anmeldetag: 26.04.1993
(51) Int. Cl.: B29B 17/00, C08J 11/02

(54) **VERFAHREN UND VORRICHTUNG ZUM RECYCLING VON BEGASTEM KUNSTSTOFFMATERIAL**
PROCESS AND DEVICE FOR RECYCLING BLOWN PLASTICS
PROCEDE ET DISPOSITIF POUR LE RECYCLAGE DE MATIERE PLASTIQUE SOUFFLEE

(30) Priorität: 30.04.1992 AT 894/92
(43) Veröffentlichungstag der Anmeldung: 15.02.1995
(73) Patentinhaber: Sunpor Technology A/S, 0250 Oslo (NO)
(72) Erfinder: Bacher, Helmut, 4490 St. Florian (AT); Schulz, Helmuth, 4490 St. Florian (AT); Wendelin, Georg, 4033 Linz (AT)
(74) Vertreter: Brauneiss, Leo, Dipl.Ing.
(86) Internationale Anmeldenummer: AT9300073
(87) Internationale Veröffentlichungsnummer: WO9322119

(56) Entgegenhaltungen:
- DE-A- 3 933 811
- DE-U- 9 109 781
- GB-A- 1 082 875
- US-A- 3 344 212
- PLASTVERARBEITER Bd. 42, Nr. 6, Juni 1991, SPEYER AM RHEIN Seiten 124 - 125, XP000233431 'VERWERTUNGSMÖGLICHKEIT FÜR GEBRAUCHTE EPS-VERPACKUNGEN' siehe Seite 125, Spalte 2, Zeile 20 - Zeile 42
- PLASTVERARBEITER Bd. 42, Nr. 6, Juni 1991, SPEYER AM RHEIN Seite 141 'EPS-Recyclingverfahren'
- TECHNISCHE RUNDSCHAU Bd. 83, Nr. 29, 19. Juli 1991, BERN CH Seite 52, XP000240484 'EPS-Recycling'

## Beschreibung

Die Erfindung bezieht sich auf ein Verfahren zum Recycling von begastem Kunststoffmaterial, z. B. geschäumtem Polystyrol, in einer Anlage, in welcher das Kunststoffmaterial aufgeschmolzen, filtriert, entgast, granuliert und durch Mischung mit Treibgas wieder begast wird, wobei die Wiederbegasung in der gleichen Anlage wie das Granulieren erfolgt. Ferner bezieht sich die Erfindung auf eine Vorrichtung zur Durchführung eines solchen Verfahrens.

Die übliche Vorgangsweise bei der Wiederbegasung von geschäumtem Kunststoffmaterial, insbesondere Polystyrol, besteht darin, daß das Kunststoffmaterial in einem Reißverdichter zerkleinert und sodann in einem Extruder plastifiziert und entgast wird. Das so erzeugte plastifizierte, entgaste Kunststoffmaterial wird in einer Granuliervorrichtung zu Granulat verarbeitet und auf diese Weise verfestigt. Das Granulat bildet eine rieselfähige, gleichmäßige, entgaste Masse, welche nun erneut in einen Extruder eingeführt und von diesem aufgeschmolzen wird. Im Zuge der Extrusion, welche mit Ein- oder Mehrschneckenextrudern durchgeführt werden kann, wird dem Extruder ein Treibgas dosiert zugeführt, welches unter Berücksichtigung von notwendigen Verweilzeiten durch den Extruder in die Kunststoffschmelze einhomogenisiert wird. Die Verwendung rieselfähigen, gleichmäßigen Granulates ist dabei zwingend nötig, weil nur auf diese Weise ein gleichmäßiger Schmelzedurchsatz im Extruder und daher ein gleichmäßiger Auffüllgrad der Schmelze mit Treibgas gewährleistet wird.

Ein ähnliches Verfahren ist aus der Literaturstelle "Plastverarbeiter", 42. Jahrgang 1991, Nr. 6, Seiten 124, 125, bekannt geworden. Hiebei werden Verpackungen aus Polystyrol vorgemahlen und anschließend in einem Walzenextruder erhitzt, so daß das Material entgast und plastifiziert wird. Das so erhaltene Endprodukt, nämlich kristallines Polystyrol, wird dann erneut einer Begasungsextrusion zugeführt.

Nachteilig an diesen bekannten Vorgangsweisen ist, daß zwei Aufschmelzvorgänge nötig sind, welche in der Regel an verschiedenen Orten durchgeführt werden, da die homogene Einarbeitung des Treibgases heikel ist und daher nicht überall durchführbar ist. In der Regel wird daher der dem Recyclingprozeß zuzuführende Kunststoffanfall dort granuliert, wo ein Reißverdichter zur Verfügung steht. Das Granulat wird dann zu einer Wiederbegasungsanlage versandt. Die damit verbundenen Transport- und Umwandlungskosten führen zu einem derart hohen Preis des wiederbegasten Materiales, daß das so gewonnene Recyclingprodukt schwer abzusetzen ist. Die Folge ist eine Umweltbelastung durch Abfälle aus geschäumtem Kunststoffmaterial oder durch unsachgemäß behandeltes Kunststoffmaterial. Hiebei tritt störend auf, daß in der Vergangenheit als Treibgase häufig solche Substanzen eingesetzt wurden (z. B. Fluorkohlenwasserstoffe), welche aus Umweltschutzgründen bedenklich sind und daher nicht in die Atmosphäre gelangen sollen.

Aus der WPI Nr. 73-02516 U (Derwent), entsprechend JP-B-73000545, ist auch bekannt, Abfälle aus geschäumtem thermoplastischem Kunststoff in einem Mehrschneckenextruder aufzuschmelzen und zu entgasen. Parallel zu diesem Extruder ist ein weiterer Extruder vorgesehen, in welchem thermoplastische Teilchen, also Neuware, aufgeschmolzen und begast werden. Die Ausgänge der beiden Extruder führen gemeinsam zu einer Misch- und Kühlstation, an welche ein weiterer Extruder sowie eine Form angeschlossen sind, wobei eine Aufschäumung des Materiales erfolgt. Das aufgeschäumte Material wird schließlich auf die gewünschte Form geschnitten bzw. granuliert. Für die Durchführung dieses Verfahrens ist ein erheblicher Aufwand an Gerät und Platz erforderlich und die oben beschriebenen Nachteile lassen sich durch dieses Verfahren nur unvollkommen vermeiden, denn das Neuware-Granulat muß ja zunächst einmal hergestellt und sodann zwischengelagert werden, wobei der Wärmeinhalt, welchen die Neuware bis zur Granulierung hatte, verloren geht.

Die Erfindung setzt sich zur Aufgabe, ein Verfahren der zuletzt geschilderten Art so zu verbessern, daß der Recyclingprozeß begasten Kunststoffmateriales rascher, einfacher, mit erheblich geringerem Aufwand am Gerät und Platz ohne Umweltbelastung und ohne Verwendung von Neuware durchführbar ist. Die Erfindung löst diese Aufgabe dadurch, daß die Wiederbegasung an dem der Entgasung unterworfenen Kunststoffmaterial und vor dem Granulieren in jenem plastischen Zustand des Kunststoffmateriales durchgeführt wird, der noch vom Aufschmelzvorgang und der Entgasung herrührt und daß hiebei zwecks Vergleichmäßigung des Begasungsgrades das pro Zeiteinheit in das Kunststoffmaterial eingeführte Treibgasvolumen und das vom Mischer pro Zeiteinheit verarbeitete Mischungsvolumen proportional dem pro Zeiteinheit der Begasung zugeführten Kunststoffvolumen geregelt werden. Für die Durchführung des erfindungsgemäßen Verfahrens ist daher lediglich eine einzige Anlage erforderlich und Zerkleinerung, Aufschmelzung, Filtrierung, Wiederbegasung und Verfestigung des eingesetzten Kunststoffmateriales können am selben Ort und daher unter Vermeidung von Transportkosten durchgeführt werden. Hiebei können die an sich bekannten Reißzerkleinerer Verwendung finden, welche nur durch eine Begasungseinrichtung und die anschließende Misch- und Verfestigungsstufe ergänzt werden müssen, um das erfindungsgemäße Verfahren durchführen zu können. Die hiefür erforderlichen Anlagekosten sind verhältnismäßig gering und amortisieren sich bereits nach kurzer Zeit durch die eingesparten Transport- und Benutzungskosten für eine fremde Wiederbegasungsanlage. Die Qualität des erhaltenen Endproduktes ist gut, auch im Hinblick auf die Homogenität bezüglich des Treibgasgehaltes, was durch die erfindungsgemäße Regelung der Begasung in Abhängigkeit von der Stromstärke des der Begasung zugeführten Kunststoffmaterialstromes erzielt wird. Ein weiterer Vorteil liegt darin, daß das eingesetzte Kunststoffmaterial nur ein einziges Mal aufgeschmolzen wird, so daß der bisher erforderliche zweite Aufschmelzvorgang eingespart wird. Dies bedeutet eine Schonung des Kunststoffmateriales, da jeder Aufschmelzvorgang die Gefahr eines Abbaues der Molekülkettenlänge des Kunststoffmateriales mit sich bringt. Weiters muß das Kunststoffmaterial zur Durchführung des erfindungsgemäßen Verfahrens nur ein einziges Mal verfestigt werden, und zwar - zum Unterschied zum eingangs erwähnten bekannten Verfahren - erst nach der Wiederbegasung.

Zum Unterschied vom zuletzt beschriebenen bekannten Verfahren wird beim erfindungsgemäßen Verfahren lediglich jenes Kunststoffmaterial eingesetzt, welches dem Recyclingprozeß unterworfen wird. Es entfällt also der Einsatz von Neuware und die damit verbundenen Kosten für Material, Transport, Lagerung und Aufschmelzung. Außerdem kommt die Erfindung mit einem wesentlich geringeren Aufwand an Geräten aus, als das bekannte Verfahren.

Die Erfindung trägt auch dem Umstand Rechnung, daß das dem Recyclingprozeß zugeführte Kunststoffmaterial nicht stets von gleicher Qualität ist, insbesondere in bezug auf das Raumgewicht bzw. den Schäumungsgrad. Die Erfindung berücksichtigt, daß beim Einsatz leichteren (höher geschäumten) Materiales der Durchsatz der zur Aufschmelzung verwendeten Vorrichtung absinken wird. Als Folge davon sinkt die in der Zeiteinheit der Begasung zugeführte Kunststoffmenge. Wird dieses pro Zeiteinheit gemessene Volumen als Führungsgröße im Sinne der Erfindung für die zur Begasung pro Zeiteinheit eingesetzte Treibgasmenge verwendet, so bleibt der Begasungsgrad für das Recyclingendprodukt zumindest im wesentlichen konstant, was im Hinblick auf die Weiterverarbeitung dieses Endproduktes erwünscht ist. Zu dieser Homogenität des Endproduktes trägt auch die proportionale Nachregelung der vom Mischer pro Zeiteinheit verarbeiteten Mischungsmenge in Abhängigkeit von der erwähnten Führungsgröße bei, da sowohl eine Untermischung als auch eine Übermischung vermieden wird und so die Zellstruktur des als Endprodukt erhaltenen Regenerates zumindest im wesentlichen konstant gehalten wird.

Da in der Regel Interesse an einer Anlage mit möglichst hoher Leistung besteht bzw. die Kapazität der vorhandenen Anlage nach Möglichkeit voll ausgenutzt werden soll, wird gemäß einer bevorzugten Variante des erfindungsgemäßen Verfahrens so vorgegangen, daß das pro Zeiteinheit der Begasung zugeführte Volumen des Kunststoffmateriales innerhalb eines vorbestimmten, vorzugsweise nahe der maximalen Kapazität der verwendeten Anlage liegenden Bereiches gehalten wird. Dies kann leicht dadurch erreicht werden, daß die zur Plastifizierung und Entgasung des eingesetzten Kunststoffmateriales verwendeten Anlageteile rascher bzw. mit erhöhtem Ausstoß laufengelassen werden.

In der Regel wird zwischen den Anlagenteilen, welche zur Plastifizierung des eingesetzten Kunststoffmateriales dienen, und den Anlagenteilen, welche zur Wiederbegasung verwendet werden, eine Pumpe für den der Begasung zugeführter Kunststoffstrom eingesetzt. Gemäß einer bevorzugten Ausführungsvariante des erfindungsgemäßen Verfahrens wird hiebei so vorgegangen, daß das eingesetzte Kunststoffmaterial zerkleinert und sodann mittels einer Schnecke plastifiziert und entgast wird, daß die so erhaltene entgaste Schmelze mittels einer Schmelzepumpe, vorzugsweise einer Zahnradpumpe, zu einem Mischer gefördert wird, dem auch das eingesetzte Treibgas zugeführt wird, wobei die von der Schmelzepumpe pro Zeiteinheit geförderte Kunststoffmenge überwacht und als Führungsgröße für die Treibgaszufuhr verwendet wird, und daß der Druck des Kunststoffmateriales auf der Saugseite der Schmelzepumpe überwacht und innerhalb eines vorbestimmten Bereiches, vorzugsweise auf einem möglichst konstanten Wert, durch Veränderung des Laufes der Schmelzepumpe und bzw. oder des Laufes der Schnecke gehalten wird. Es wird also der Schmelzedruck vor der Schmelzepumpe annähernd konstant gehalten durch Anpassung der Förderung der Plastifizierschnecke oder der Schmelzepumpe, wobei durch proportionale Nachregelung der Treibgaszufuhr in Abhängigkeit von der als Führungsgröße dienenden, pro Zeiteinheit gemessenen Förderung der Schmelzepumpe der gewünschte konstante Treibgasgehalt im vom Mischer erzeugten Endprodukt erhalten wird. Die erwähnte Einhaltung eines bestimmten Intervalles des Druckes des der Schmelzepumpe zugeführten Materiales sichert, daß die Schmelzepumpe keine Leerhübe vollführt und auf diese Weise das Fördervolumen sich exakt proportional verhält zum Lauf der Schmelzepumpe, insbesondere zur Drehzahl der Zahnradpumpe. Außerdem läßt sich auf diese Weise die Anlage leicht an die maximale Anlagenkapazität heranführen.

Im Rahmen der Erfindung ist es besonders günstig, das Treibgas dem Strom des Kunststoffmateriales schon vor dessen Einleitung in den Mischer zuzusetzen, um bereits vor Eintritt des Kunststoffmateriales bzw. des Treibgases in den Mischer eine gewisse Durchmischung von Kunststoffmaterial und Treibgas zu erzielen.

Für die gleichmäßige Treibgasaufnahme ist der Schmelzedruck nach der Schmelzepumpe wichtig. Gemäß einer Weiterbildung der Erfindung wird daher so vorgegangen, daß bei Abweichung des Druckes der von der Schmelzepumpe geförderten Kunststoffschmelze von einem vorgegebenen Sollwert die Viskosität der vom Mischer verarbeiteten Mischung durch Kühlung und bzw. oder Erwärmung entsprechend verändert wird, vorzugsweise bis zur Erreichung dieses Sollwertes.

In der Regel wird für die Wiederbegasung Pentan verwendet. Um die Explosionsgefahr im Anlagenteil nach der Entgasung zu vermeiden, wird im Rahmen der Erfindung bei der Entgasung des Kunststoffmateriales das Vakuum überwacht.

Die erfindungsgemäße Vorrichtung zur Durchführung des erfindungsgemäßen Verfahrens geht aus von einer Anlage mit einer Zerkleinerungsvorrichtung für das zu verarbeitende Kunststoffmaterial, an welche zumindest eine durch einen Motor angetriebene Schnecke zur Plastifizierung dieses Materiales angeschlossen ist, der eine Entgasungseinrichtung für das Kunststoffmaterial zugeordnet ist. Ausgehend hievon kennzeichnet sich die erfindungsgemäße Vorrichtung dadurch, daß der Auslaß nur dieser Schnecken mittels zumindest einer Leitung mit einem Mischer verbunden ist, an den auch eine Einrichtung zur Treibgaszufuhr angeschlossen ist, und daß an zumindest eine dieser Leitungen eine Einrichtung zur Erfassung der pro Zeiteinheit in dieser Leitung fließenden Kunststoffmenge angeschlossen ist, welche Einrichtung mit einer Steuereinheit für die Treibgaszufuhr zum Mischer und für die Drehzahl des Motors der Schnecke verbunden ist. Auf diese Weise läßt sich mit einfachem konstruktivem Aufwand das erfindungsgemäße Verfahren durchführen. Da jedoch der im Auslaß der Schnecke und damit in der zum Mischer führenden Leitung herrschende Druck allein oft nicht ausreichend sein wird, um das plastifizierte Kunststoffmaterial verläßlich in den Mischer einzuführen, ist gemäß einer bevorzugten Ausführungsform der erfindungsgemäßen Vorrichtung in die von der Schnecke zum Mischer führende Leitung eine Schmelzepumpe, insbesondere eine Zahnradpumpe, zur Förderung der Kunststoffschmelze eingeschaltet, wobei eine Meßeinrichtung für die Laufgeschwindigkeit dieser Schmelzepumpe vorhanden ist, und wobei an diese Leitung ein Druckfühler für den Druck auf der Saugseite dieser Schmelzepumpe angeschlossen ist, welcher Druckfühler ebenso wie die Meßeinheit mit der Steuereinheit verbunden sind. Die, zweckmäßig elektronische, Steuereinheit wertet die vom Druckfühler und von der Meßeinrichtung an sie abgegebenen Meßergebnisse aus und regelt entsprechend diesen Meßergebnissen die Treibgaszufuhr zur Kunststoffschmelze derart, daß deren Treibgasgehalt zumindest annähernd konstant bleibt, so daß ein homogenes Endprodukt erhalten wird.

Weitere Kennzeichen und Vorteile der vorliegenden Erfindung ergeben sich aus der Beschreibung zweier Ausführungsbeispiele der erfindungsgemäßen Vorrichtung, welche in der Zeichnung schematisch dargestellt sind.

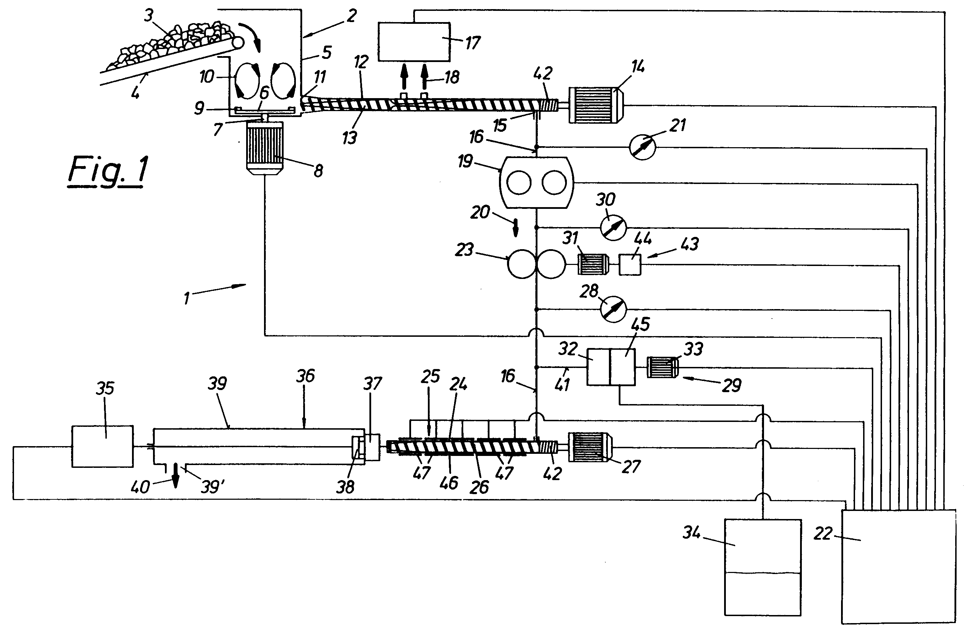

Gemäß der Ausführungsform nach Figur 1 hat die zur Durchführung des Verfahrens dienende Anlage 1 eine als Reißverdichter ausgebildete Zerkleinerungsvorrichtung 2, der das dem Recyclingprozeß zuzuführende Kunststoffmaterial 3, insbesondere geschäumtes Polystyrol, z. B. Styropor (Wz), mittels eines Förderers 4 zugeführt wird. Das Kunststoffmaterial 3 fällt von oben in einen Aufnahmebehälter 5 der Zerkleinerungsvorrichtung 2, in dessen Bodenbereich ein Werkzeug 6 für die Zerkleinerung bzw. Mischung des Kunststoffmateriales 3 um eine vertikale Achse 7 umläuft, wobei der Antrieb des Werkzeuges 6 von einem Motor 8 erfolgt. Das Werkzeug 6 ist mit auf das Kunststoffmaterial 3 einwirkenden Messern 9 versehen, die das Material 3 zerkleinem und mischen, wobei das Material im Aufnahmebehälter 5 in Form einer Mischtrombe 10 umläuft. Auf der Höhe des Werkzeuges 6 hat die Seitenwand des Aufnahmebehälters 5 eine Austragsöffnung 11, an die das Gehäuse 12 einer Schnecke 13 in radialer Richtung angeschlossen ist. Die Schnecke wird an ihrem dem Aufnahmebehälter 5 abgewendeten Ende von einem Motor 14 angetrieben. Mittels der Schnecke 13 wird das aus dem Behälter 5 zugeführte Kunststoffmaterial plastifiziert und am Ausmaß 15 des Gehäuses 12 im plastifizierten Zustand bzw. als Schmelze in eine Leitung 16 gedrückt. Das Gehäuse 12 ist weiters mit seitlichen Öffnungen versehen, durch welche aus der von der Schnecke 13 geförderten Schmelze Gase in eine Entgasungseinrichtung 17 über eine oder mehrere Leitungen 18 entweichen können. Diese Gase werden zweckmäßig gesammelt, erforderlichenfalls gereinigt und der Wiederverwendung zugeführt.

In die Leitung 16 ist zumindest ein Filter 19 eingeschaltet, durch das die Kunststoffschmelze von mitgeführten Verunreinigungen befreit wird. Vor dem Filter 19, gesehen in Fließrichtung der Kunststoffschmelze (Pfeil 20), ist an die Leitung 16 ein Druckfühler 21 angeschlossen, der auch mit einer Steuereinheit 22 verbunden ist, durch welche die gesamte Anlage 1 überwacht und im Sinne eines optimalen Betriebszustandes gesteuert wird. An diese Steuereinheit 22 ist auch der Motor 14 angeschlossen. In der Leitung 16 liegt nach dem Filter 19 eine als Zahnradpumpe ausgebildete Schmelzepumpe 23, welche durch einen Motor 31 angetrieben wird und das Kunststoffmaterial durch die Leitung 16 in das Gehäuse 24 eines Mischers 25 führt, welcher als statischer oder dynamischer Mischer ausgebildet sein kann. Das dargestellte Ausführungsbeispiel zeigt einen dynamischen Mischer, welcher ein im Gehäuse 24 gelagertes Mischelement, z.B. eine Mischschnecke 26 aufweist, die durch einen Motor 27 angetrieben wird. Anstelle eines solchen dynamischen Mischers kann auch ein statischer Mischer treten, bei welchem im Gehäuse 24 Schikanen vorgesehen sind, welche auf das zugeführte Kunststoffmaterial einen Mischeffekt ausüben. Im Mischer 25 erfolgt die Wiederbegasung des Kunststoffmateriales bzw. die Einarbeitung des Gases in den nur ein Zwischenprodukt darstellenden plastifizierten bzw. schmelzenartigen Kunststoff, welcher mittels der Pumpe 23 vom Entgasungsextruder 12, 13 direkt zugeleitet wird, ohne jedweden Zusatz eines gashältigen Kunststoffes oder von neuem Kunststoffmaterial. Hiezu sind zwischen der Schmelzepumpe 23 und dem Mischer 25 an die Leitung 16 ein weiterer Druckfühler 28 und eine Einrichtung 29 zur Gaszufuhr in die Kunststoffschmelze angeschlossen. Ein weiterer Druckfühler 30 ist an die Leitung 16 zwischen dem Filter 19 und der Pumpe 23 angeschlossen. Die Gaszufuhreinrichtung 29 hat eine Dosiereinrichtung 32 mit einer Pumpe für das in die Kunststoffschmelze einzubringende Treibgas, welche Einrichtung 32 von einem Motor 33 angetrieben und mit Treibgas, z.B. bei Atmosphärendruck flüssigem Pentan, aus einer Treibgasquelle 34 versorgt wird. Alle diese Motoren 14, 27, 31, 33 sind ebenso wie die Druckfühler 21, 28, 30 und das Filter 19 an die Steuereinheit 22 angeschlossen. Weiters ist an diese Steuereinrichtung 22 ein Motor 35 für eine Granuliereinrichtung 36 angeschlossen, der das zu granulierende Kunststoffmaterial vom Mischer 25 über einen Extruderkopf 37 zugeleitet wird. Vor dem Extruderkopf 37 läuft zumindest ein durch den Motor 35 angetriebenes Messer 38 um und die abgeschlagenen Kunststoffkörner sammeln sich in einem Granuliergehäuse 39, wo sie gekühlt und durch einen Auslaß 39' in Richtung des Pfeiles 40 abgeführt werden.

Die der Wiederbegasung zugeführte Kunststoffmenge stammt ausschließlich vom Extruder, der vom Gehäuse 12 und der Schnecke 13 gebildet ist, wobei jedoch selbstverständlich mehrere solche Extruder gemeinsam an die Leitung 16 angeschlossen sein können. Es erfolgt also kein Zusatz von Neuware zum von der Schnecke 13 in die Leitung 16 geförderten Kunststoffmaterial, es sei denn, es wird Neuware über den Förderer 4 in die Zerkleinerungsvorrichtung 2 zusammen mit dem anderen Kunststoffmaterial eingebracht. Letzters kann der Fall sein, wenn Abfälle aus der Produktion von Neuware aus geschäumten Kunststoffen verarbeitet werden, also z.B. Reste von geschäumten Kunststoffblöcken usw.

Die ganze Anlage 1 wird von der Steuereinrichtung 22 so gesteuert, daß der Treibgasfüllgrad im durch den Auslaß 39' abgeführten Kunststoffgranulat zumindest annähernd konstant bleibt, auch wenn die Qualität des über den Förderer 4 zugeführten Kunststoffmateriales 3 sich ändert. Hiezu dient zunächst eine Einrichtung 43 zur Messung der pro Zeiteinheit in der Leitung 16 fließenden Kunststoffmenge, welche Einrichtung 43 mit der Steuereinheit 22 verbunden ist. Da durch den Druckfühler 30 und die Einrichtung 22 dafür gesorgt wird, daß der Druck des über die Leitung 16 der Zahnradpumpe 23 zugeführten Kunststoffmateriales sich innerhalb eines vorbestimmten Druckbereiches bewegt, so daß die Zahnradpumpe 23 stets voll gefüllt ist, jedoch auch eine schwankende Komprimierung des Kunststoffmateriales vermieden ist, verhält sich die von der Zahnradpumpe 23 geförderte Kunststoffmenge proportional zur Drehzahl der Zahnradpumpe 23. Diese Drehzahl kann im einfachsten Fall durch einen die Einrichtung 43 bildenden Drehzahlmesser 44 erfaßt und an die Steuereinrichtung 22 gemeldet werden. Um hiebei auch Änderungen des der gesamten Anlage 1 zugeführten Kunststoffmateriales zu berücksichtigen, dient der den Vordruck der Zahnradpumpe 23 abfühlende Druckfühler 30. Wird also z.B. von der einen Extruder bildenden Schnecke 13 leichteres ( höher geschäumtes) Kunststoffmaterial 3 eingezogen, so sinkt die durch den Auslaß 15 in die Leitung 16 pro Zeiteinheit geförderte Kunststoffmenge ab. Als Folge davon wird auch der Druck vor der Schmelzepumpe 23 absinken, was durch den Druckfühler 30 an die Steuereinheit 22 gemeldet wird. Diese veranlaßt, daß die Schnecke 13 schneller über den Motor 14 angetrieben wird und bzw. oder die Schmelzepumpe 23 langsamer über den Motor 31 angetrieben wird. Wird die Geschwindigkeit der Zahnradpumpe 23 verstellt, so veranlaßt der Drehzahlmesser 44 der Einrichtung 43 die Steuereinrichtung 22 zugleich, daß eine in der Dosiereinrichtung 32 vorhandene Gaspumpe 45 proportional mitverstellt wird. Um den über den Druckfühler 30 abgefühlten Vordruck der Zahnradpumpe 23 - wie erwähnt - innerhalb eines vorbestimmten Bereiches zu halten, um zu vermeiden, daß die Zahnlücken der Zahnradpumpe 23 nicht voll mit Kunststoffmaterial gefüllt werden bzw. daß durch die Schmelzepumpe 23 eine zusätzliche Komprimierung des Kunststoffmateriales erfolgt - wird über die Steuereinheit 22 in erster Linie die Arbeitsgeschwindigkeit der Plastifizierschnecke 13 durch Drehzahlregelung des Motors 14 entsprechend geregelt. Zusätzlich hiezu kann - insbesondere dann, wenn die erwähnte Drehzahlregelung des Motors 14 nicht ausreicht - auch die Drehzahl des Motors 31 der Zahnradpumpe 23 entsprechend von der Steuereinheit 22 geregelt werden. Dies hat eine Änderung des von der Zahnradpumpe 23 geförderten Stromes pro Zeiteinheit zur Folge, was über den Drehzahlmesser 44 an die Steuereinheit 22 gemeldet wird, die entsprechende proportionale Regelung der Gasdosierung in der Einrichtung 29 veranlaßt, z.B. in einfacher Weise durch Regelung der Laufgeschwindigkeit der Gaspumpe 45 mittels des Motors 33. Weiters wird durch den hinter der Zahnradpumpe 23 an die Leitung 16 angeschlossenen Druckfühler 28 der Förderdruck der Zahnradpumpe 23 überwacht. Da dieser Druck wichtig ist für die Gasaufnahme der Schmelze, wird dieser Druck über die Steuereinheit 22 nach Möglichkeit konstant gehalten. Hiezu wird zunächst über die Steuereinheit 22 der Motor 27 des Mischers 25 so beeinflußt, daß der Mischer 25 stets gerade soviel Volumen an Kunststoff-Gas-Mischung aufnimmt, als ihm durch die Zahnradpumpe 23 bzw. durch die Gaspumpe 45 zugeführt wird. Zusätzlich hiezu kann der Widerstand im Mischer 25 durch Änderung der Viskosität des im Mischer 25 befindlichen Kunststoffmateriales beeinflußt werden. Hiezu sind am Mantel des Gehäuses 46 des Mischers 25 mehrere Heiz- bzw. Kühlzonen 47 angeordnet, die zusammen eine Heiz- und Kühl-Kaskadensteuerung ergeben und einzeln oder in beliebiger Kombination durch die Steuereinheit 22 in Abhängigkeit des als Führungsgröße dienenden konstanten Druckes in dem hinter der Zahnradpumpe 23 liegenden Abschnitt der Leitung 16 zugeschaltet werden können.

Wie die Zeichnung zeigt, mündet die Leitung 41, über welche die Treibgaszufuhr zur Schmelze erfolgt, in die Leitung 16, so daß in jenem Abschnitt der Leitung 16, welcher zwischen der Leitung 41 und dem Mischer 25 liegt, bereits eine Vormischung des Kunststoffmateriales mit dem Treibgas erfolgt. Es kann jedoch die Leitung 41 auch an das Gehäuse des Mischers 25 angeschlossen sein. Zweckmäßig liegt in der Leitung 41 ein nicht dargestelltes Rückschlagventil.

Wie ferner in der Zeichnung dargestellt ist, sind die beiden Schnecken 13,26 an ihren den Motoren 14 bzw. 27 zugewendeten Enden mit in Gegenrichtung fördernden Schneckengängen 42 versehen, welche eine Abdichtung für die über die Motoren 14 bzw. 27 angetriebenen Antriebswellen bilden.

Der Druckfühler 21 dient dazu, den Druck der Kunststoffschmelze unmittelbar am Auslaß 15 und vor dem Filter 19 abzufühlen. Dies hat den Zweck, die Verschmutzung des Filters 19 zu überwachen und rechtzeitig einen Siebwechselvorgang oder Siebrückspülvorgang einzuleiten, wenn der Druck in der Leitung 16 vor dem Filter 19 über einen vorbestimmten Wert ansteigt. Diese Vorgänge werden ebenfalls von der Steuereinheit 22 veranlaßt. Geeignete Filter 19, welche einen Siebwechsel- oder Siebreinigungsvorgang, z.B. durch Rückspülung, ohne wesentliche Beeinträchtigung des Kunststoffmaterialdruckes in der Leitung 16 nach dem Filter 19 gestatten, sind bekannt.

Selbstverständlich ist es auch möglich, mehrere Zerkleinerungsvorrichtungen 2 und daran angeschlossene Extruder 12,13 über mehrere Leitungen 16 an einen gemeinsamen Mischer 25 anzuschließen. In analoger Weise wäre es möglich, von einem einzigen Extruder 12,13 mehrere parallele Leitungen 16 zu einem Mischer 25 zu führen.

Es wäre auch möglich, über die Leitung 16 das plastifizierte Kunststoffmaterial unmittelbar, d.h. ohne Förderung durch eine Schmelzepumpe 23, in den Mischer 25 einzuleiten. Dies setzt jedoch voraus, daß der Durchstrom des Kunststoffmateriales 16 in dieser Leitung in geeigneter Weise überwacht werden kann, beispielsweise durch einen üblichen Flußmesser. Aus den erwähnten Gründen muß auch der Druck in der Leitung 16 überwacht werden. Die Regelung der Gaszufuhr bzw. der Laufgeschwindigkeit der Schnecke 13 und bzw. oder des Mischers 25 erfolgt über die Steuereinheit 22 in analoger Weise wie früher beschrieben.

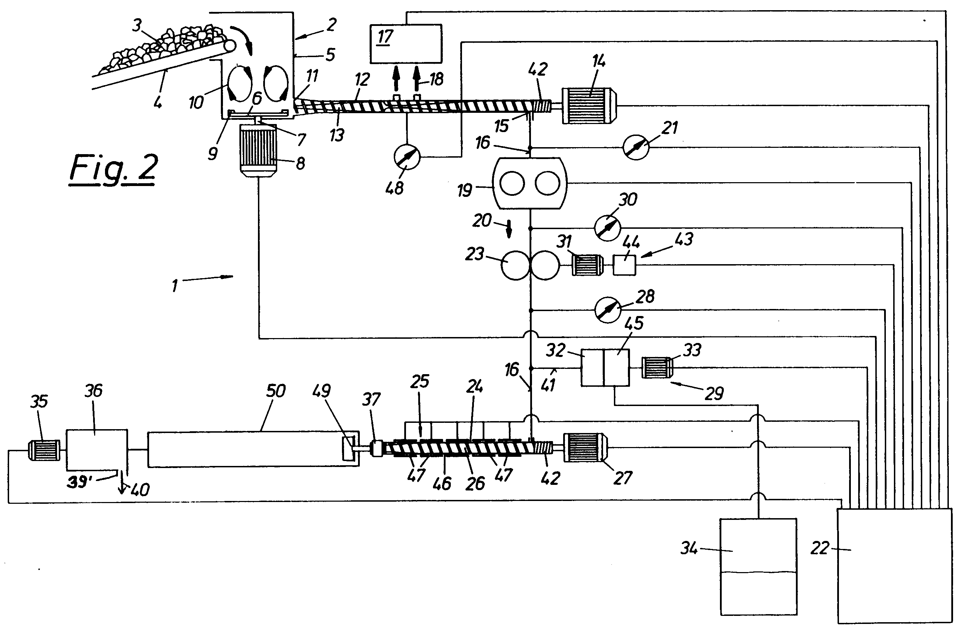

Bei der Ausführungsvariante nach Fig. 2 ist an das Gehäuse 12 der Schnecke 13 ein Vakuum-Kontrollgerät 48 angeschlossen, welches das gemessene Vakuum an die Steuereinheit 22 meldet. Dies dient zur Überwachung der Funktion der Entgasungseinrichtung 17 und verhindert daher eine Explosionsgefahr für das zur Begasung verwendete Pentan. Weiters ist an de Granulierkopf 37 bzw. dessen Strangdüse 49 nicht unmittelbar eine Granuliereinrichtung 36 angeschlossen, sondern unter Zwischenschaltung einer Strangkühleinrichtung 50, in welcher die Strangdüse 49 angeordnet ist. Der von ihr erzeugte Kunststoffstrang läuft in der Kühleinrichtung 50 in einem Kühlbad und tritt erst nach Durchlaufen der Strangkühleinrichtung 50 in die Granuliereinrichtung 36 ein, in welcher die Granulatteilchen in an sich bekannter Weise aus dem Strang durch Abschlagen mittels rotierender Messer erzeugt werden. Das Granulat tritt durch den Auslaß 39' in Richtung des Pfeiles 40 aus der Granuliereinrichtung 36 aus. Auch die Verhältnisse in der Strangkühleinrichtung 50 können von der Steuereinheit 22 in gewünschter Weise beeinflußt werden.

## Patentansprüche

1. Verfahren zum Recycling von begastem Kunststoffmaterial, z. B. geschäumtem Polystyrol, in einer Anlage, in welcher das Kunststoffmaterial aufgeschmolzen, filtriert, entgast, granuliert und durch Mischung mit Treibgas wieder begast wird, wobei die Wiederbegasung in der gleichen Anlage wie das Granulieren erfolgt, dadurch gekennzeichnet, daß die Wiederbegasung an dem der Entgasung unterworfenen Kunststoffmaterial und vor dem Granulieren in jenem plastischen Zustand des Kunststoffmateriales durchgeführt wird, der noch vom Aufschmelzvorgang und der Entgasung herrührt und daß hiebei zwecks Vergleichmäßigung des Begasungsgrades das pro Zeiteinheit in das Kunststoffmaterial eingeführte Treibgasvolumen und das bei der Mischung pro Zeiteinheit verarbeitete Mischungsvolumen proportional dem pro Zeiteinheit der Begasung zugeführten Kunststoffvolumen geregelt werden.

2. Verfahren nach Anspruch 1, dadurch gekennzeichnet, daß das pro Zeiteinheit der Begasung zugeführte Volumen des Kunststoffmateriales innerhalb eines vorbestimmten, vorzugsweise nahe der maximalen Kapazität der verwendeten Anlage liegenden, Bereiches gehalten wird.

3. Verfahren nach Anspruch 1 oder 2, dadurch gekennzeichnet, daß das eingesetzte Kunststoffmaterial zerkleinert und sodann mittels einer Schnecke plastifiziert und entgast wird, daß nur die so erhaltene entgaste Schmelze mittels einer Schmelzepumpe, vorzugsweise einer Zahnradpumpe, zu einem Mischer gefördert wird, dem auch das eingesetzte Treibgas zugeführt wird, wobei die von der Schmelzepumpe pro Zeiteinheit geförderte Kunststoffmenge überwacht und als Führungsgröße für die Treibgaszufuhr verwendet wird, und daß der Druck des Kunststoffmateriales auf der Saugseite der Schmelzepumpe überwacht und innerhalb eines vorbestimmten Bereiches, vorzugsweise auf einen möglichst konstanten Wert, durch Veränderung des Laufes der Schmelzepumpe und bzw. oder des Laufes der Schnecke gehalten wird.

4. Verfahren nach Anspruch 3, dadurch gekennzeichnet, daß das Treibgas dem Strom des Kunststoffmateriales schon vor dessen Einleitung in den Mischer zugesetzt wird.

5. Verfahren nach Anspruch 3 oder 4, dadurch gekennzeichnet, daß bei Abweichung des Druckes der von der Schmelzepumpe geförderten Kunststoffschmelze von einem vorgegebenen Sollwert die Viskosität der vom Mischer verarbeiteten Mischung durch Kühlung und bzw. oder Erwärmung entsprechend verändert wird, vorzugsweise bis zur Erreichung dieses Sollwertes.

6. Verfahren nach einem der Ansprüche 1 bis 5, dadurch gekennzeichnet, daß bei der Entgasung des Kunststoffmateriales das Vakuum überwacht wird.

7. Verfahren nach einem der Ansprüche 1 bis 6, dadurch gekennzeichnet, daß als Treibgas flüssiges Pentan verwendet wird.

8. Vorrichtung zur Durchführung des Verfahrens nach einem der Ansprüche 1 bis 7, mit einer Zerkleinerungsvorrichtung (2) für das zu verarbeitende Kunststoffmaterial, an welche zumindest eine durch einen Motor (14) angetriebene Schnecke (13) zur Plastifizierung dieses Materiales angeschlossen ist, der eine Entgasungseinrichtung (17) für das Kunststoffmaterial zugeordnet ist, dadurch gekennzeichnet, daß der Auslaß (15) nur dieser Schnecken (13) mittels zumindest einer Leitung (16) mit einem Mischer (25) verbunden ist, an den auch eine Einrichtung (29) zur Treibgaszufuhr angeschlossen ist, und daß an zumindest eine dieser Leitungen (16) eine Einrichtung (43) zur Erfassung der pro Zeiteinheit in diese Leitung (16) fließenden Kunststoffmenge angeschlossen ist, weiche Einrichtung (43) mit einer Steuereinheit (22) für die Treibgaszufuhr zum Mischer (25) und für die Drehzahl des Motors (14) der Schnecke (13) verbunden ist.

9. Vorrichtung nach Anspruch 8, dadurch gekennzeichnet, daß in die von der Schnecke (13) zum Mischer (25) führende Leitung (16) eine Schmelzepumpe (23), insbesondere eine Zahnradpumpe, zur Förderung der Kunststoffschmelze eingeschaltet ist, wobei eine Meßeinrichtung, z. B. ein Drehzahlmesser (44), für die Laufgeschwindigkeit dieser Schmelzepumpe (23) vorhanden ist, und daß an diese Leitung (16) ein Druckfühler (30) für den Druck auf der Saugseite dieser Schmelzepumpe (23) angeschlossen ist, und wobei dieser Druckfühler (30) und die Meßeinrichtung, z. B. der Drehzahlmesser (44), mit der Steuereinheit (22) verbunden sind.

10. Vorrichtung nach Anspruch 8 oder 9, dadurch gekennzeichnet, daß die Einrichtung (29) zur Treibgaszufuhr mittels einer Gasleitung (41) an die das Kunststoffmaterial zum Mischer (25) führende Leitung (16) angeschlossen ist.

11. Vorrichtung nach Anspruch 9 oder 10, dadurch gekennzeichnet, daß der Schmelzepumpe (23) ein Filter (19) für das Kunststoffmaterial vorgeschaltet ist.

12. Vorrichtung nach Anspruch 11, dadurch gekennzeichnet, daß vor dem Filter (19) ein weiterer Druckfühler (21) an die zur Schmelzepumpe (23) führende Leitung (16) für das Kunststoffmaterial angeschlossen ist, welcher Druckfühler (21) ebenfalls mit der Steuereinheit (22) verbunden ist.

13. Vorrichtung nach einem der Ansprüche 9 bis 12, dadurch gekennzeichnet, daß auch ein Druckfühler (30) für den Druck des von der Schmelzepumpe (23) zum Mischer (25) geförderten Kunststoffmateriales an die Leitung (16) angeschlossen ist, welcher Druckfühler (30) ebenfalls mit der Steuereinheit (22) verbunden ist.

14. Vorrichtung nach Anspruch 13, dadurch gekennzeichnet, daß der Mischer (25) mit, vorzugsweise mehreren, Heiz- und Kühlzonen (47) versehen ist, die mit der Steuereinheit (22) verbunden sind.

15. Vorrichtung nach einem der Ansprüche 8 bis 14, dadurch gekennzeichnet, daß an das Gehäuse (12) der Schnecke (13) eine Vakuumkontrolleinrichtung (48) im Bereich der Entgasungseinrichtung (17) angeschlossen ist (Fig. 2).

## Claims

1. Process for recycling foamed plastics material, for example polystyrene foam, in a plant in which the plastics material is melted open, filtered, defoamed, granulated and refoamed by mixing with driving gas, the refoaming taking place in the same plant as the granulation, **characterised in that** the refoaming is carried out on the plastics material subjected to defoaming and before granulation, in the plastic state of the plastics material, which plastic state is still caused by the melting process and the defoaming, and in that, at the same time, for the purpose of averaging the degree of foaming, the volume of driving gas inserted into the plastics material per unit of time and the mixing volume processed per unit of time during mixing are regulated in proportion to the volume of plastics material supplied to the foaming per unit of time.

2. Process according to claim 1, **characterised in that** the volume of plastics material supplied to the foaming per unit of time is maintained within a pre-determined range that is preferably close to the maximum capacity of the plant in use.

3. Process according to claim 1 or 2, **characterised in that** the plastics material used is crushed and then plasticised and defoamed by means of a worm so that only the defoamed melt thus obtained is conveyed by means of a melt pump, preferably a gear pump, to a mixer which is also supplied with the driving gas used, wherein the quantity of plastics conveyed by the melt pump per unit of time is monitored and used as a reference variable for the driving gas supply, and in that the pressure of the plastics material on the suction side of the melt pump is monitored and maintained within a pre-determined range, preferably at a value that is as constant as possible, by altering the operation of the melt pump and/or the operation of the worm.

4. Process according to claim 3, **characterised in that** the driving gas is already added to the stream of plastics material before its introduction into the mixer.

5. Process according to claim 3 or 4, **characterised in that**, when the pressure of the plastics melt conveyed by the melt pump deviates from a pre-selected setpoint, the viscosity of the mixture processed by the mixer is altered in a corresponding manner by cooling and/or heating, preferably until that setpoint is reached.

6. Process according to one of claims 1 to 5, **characterised in that** the vacuum is monitored during the defoaming of the plastics material.

7. Process according to one of claims 1 to 6, **characterised in that** liquid pentane is used as driving gas.

8. Device for carrying out the process according to one of claims 1 to 7, having a crushing device (2) for crushing the plastics material for processing, to which crushing device there is attached at least a worm (13) driven by a motor (14) for the plasticization of this material, with which worm there is associated a defoaming device (17) for the plastics material, **characterised in that** the outlet (15) of these worms (13) only is connected by means of at least a pipeline (16) to a mixer (25) to which there is also attached a device (29) for the driving gas supply, and in that a device (43) for determining the quantity of plastics flowing into this pipeline (16) per unit of time is attached to at least one of these pipelines (16), which device (43) is connected to a control unit (22) for the driving gas supply to the mixer (25) and for the rotational speed of the motor (14) of the worm (13).

9. Device according to claim 8, **characterised in that**, for conveying the plastics melt, a melt pump (23), in particular a geared pump is connected to the pipeline (16) leading from the worm (13) to the mixer (25), there being a measuring device, for example a revolutions counter (44), for the speed of this melt pump (23), and in that a pressure sensor (30) for the pressure on the suction side of this melt pump (23) is attached to this pipeline (16), and wherein this pressure sensor (30) and the measuring device, for example the revolutions counter (44), are connected to the control unit (22).

10. Device according to claim 8 or 9, **characterised in that** the device (29) for the driving gas supply is attached by way of a gas pipeline (41) to the pipeline (16) taking the plastics material to the mixer (25).

11. Device according to claim 9 or 10, **characterised in that** a filter (19) for the plastics material is connected before the melt pump (23).

12. Device according to claim 11, **characterised in that** a further pressure sensor (21) is attached before the filter (19) to the pipeline (16) leading to the melt pump (23) for the plastics material, which pressure sensor (21) is likewise connected to the control unit (22).

13. Device according to one of claims 9 to 12, **characterised in that** a pressure sensor (30) for the pressure of the plastics material conveyed by the melt pump (23) to the mixer (25) is also attached to the pipeline (16), which pressure sensor (30) is likewise connected to the control unit (22).

14. Device according to claim 13, **characterised in that** the mixer (25) is provided with heating and cooling zones, preferably several heating and cooling zones (47), which are connected to the control unit (22).

15. Device according to one of claims 8 to 14, **characterised in that** a vacuum checking device (48) is attached to the housing (12) of the worm (13) in the region of the defoaming device (17) (Figure 2).

## Revendications

1. Procédé pour le recyclage de matière plastique soufflée, par exemple de polystyrène expansé, dans une installation dans laquelle la matière plastique est fondue, filtrée, dégazée, granulée et soufflée à nouveau par mélange avec un gaz de soufflage, le soufflage à nouveau ayant lieu dans la même installation que la granulation, caractérisé par le fait que l'on réalise le soufflage à nouveau sur la matière plastique soumise au dégazage, et avant la granulation, dans l'état de plasticité de la matière plastique qui provient encore de l'opération de fusion et du dégazage, et par le fait qu'aux fins d'une homogénéisation du taux de soufflage, on régule ici le volume de gaz de soufflage qui est introduit dans la matière plastique par unité de temps et le volume de mélange qui est traité par unité de temps lors du mélange, et ce, proportionnellement au volume de matière plastique qui est amené au soufflage par unité de temps.

2. Procédé selon la revendication 1, caractérisé par le fait que l'on maintient le volume de matière plastique qui est amené au soufflage par unité de temps à l'intérieur d'une gamme prédéterminée qui est de préférence située au voisinage de la capacité maximale de l'installation utilisée.

3. Procédé selon la revendication 1 ou 2, caractérisé par le fait que l'on fragmente la matière plastique utilisée, qu'on la ramollit ensuite au moyen d'une vis sans fin et qu'on la dégaze, par le fait que c'est uniquement la masse fondue dégazée ainsi obtenue que l'on amène au moyen d'une pompe à masse fondue, et de préférence d'une pompe à engrenages, à un mélangeur auquel est également amené le gaz de soufflage utilisé, cependant que l'on surveille la quantité de matière plastique qui est déplacée par la pompe à masse fondue par unité de temps et qu'on l'utilise comme grandeur de commande pour l'amenée de gaz de soufflage, et par le fait que l'on surveille la pression de la matière plastique du côté de l'aspiration de la pompe à masse fondue, et qu'on la maintient à l'intérieur d'une gamme prédéterminée, et de préférence à une valeur aussi constante que possible, en modifiant la vitesse de rotation de la pompe à masse fondue et/ou la vitesse de rotation de la vas sans fin.

4. Procédé selon la revendication 3, caractérisé par le fait que l'on ajoute déjà le gaz de soufflage au courant de la matière plastique avant son introduction dans le mélangeur.

5. Procédé selon la revendication 3 ou 4, caractérisé par le fait que, lorsque la pression de la masse fondue de matière plastique déplacée par la pompe à masse fondue s'écarte d'une valeur de consigne prédéterminée, on modifie en conséquence par refroidissement et/ou par chauffage la viscosité du mélange traité par le mélangeur, de préférence jusqu'à ce que cette valeur de consigne soit atteinte.

6. Procédé selon l'une des revendications 1 à 5, caractérisé par le fait que l'on surveille le vide lors du dégazage de la matière plastique.

7. Procédé selon l'une des revendications 1 à 6, caractérisé par le fait que l'on utilise du pentane liquide comme gaz de soufflage.

8. Dispositif pour la mise en oeuvre du procédé selon l'une des revendications 1 à 7, comprenant un dispositif (2) de fragmentation de la matière plastique à traiter auquel est raccordée au moins une vis sans fin (13) de ramollissement de cette matière qui est entraînée par un moteur (14) et à laquelle est associé un dispositif (17) de dégazage de la matière plastique, caractérisé par le fait que la sortie (15) de cette seule vis sans fin (13) est reliée au moyen d'au moins une conduite (16) à un mélangeur (25) auquel est également relié un dispositif (29) d'amenée de gaz de soufflage, et par le fait qu'est relié à l'une au moins de ces conduites (16) un dispositif (43) pour déterminer la quantité de matière plastique qui s'écoule dans cette conduite (16) par unité de temps, ce dispositif (43) étant relié à une unité de commande (22) qui agit sur l'amenée de gaz de soufflage au mélangeur (25) et sur la vitesse de rotation du moteur (14) de la vis sans fin (13).

9. Dispositif selon la revendication 8, caractérisé par le fait qu'est montée dans la conduite (16) qui amène de la vis sans fin (13) au mélangeur (25) une pompe à masse fondue (23), et en particulier une pompe à engrenages, pour déplacer la masse fondue de matière plastique, cependant qu'il est prévu un dispositif de mesure, comme par exemple un indicateur du nombre de tours (44), qui détermine la vitesse de rotation de cette pompe à masse fondue (23), et par le fait qu'un capteur de pression (30) déterminant la pression du côté de l'aspiration de cette pompe à masse fondue (23) est raccordé à cette conduite (16), cependant que ce capteur de pression (30) et le dispositif de mesure, comme par exemple l'indicateur du nombre de tours (44), sont reliés à l'unité de commande (22).

10. Dispositif selon la revendication 8 ou 9, caractérisé par le fait que le dispositif (29) d'amenée de gaz de soufflage est raccordé au moyen d'une conduite de gaz (41) à la conduite (16) qui amène la matière plastique au mélangeur (25).

11. Dispositif selon la revendication 9 ou 10, caractérisé par le fait qu'un filtre (19) destiné à la matière plastique est monté en amont de la pompe à masse fondue (23).

12. Dispositif selon la revendication 11, caractérisé par le fait qu'un autre capteur de pression (21) est raccordé avant le filtre (19) à la conduite (16) qui amène la matière plastique à la pompe à masse fondue (23), ce capteur de pression (21) étant également relié à l'unité de commande (22).

13. Dispositif selon l'une des revendications 9 à 12, caractérisé par le fait qu'un capteur de pression (30) déterminant la pression de la matière plastique qui est déplacée depuis la pompe à masse fondue (23) jusqu'au mélangeur (25) est également raccordé à la conduite (16), ce capteur de pression (30) étant également relié à l'unité de commande (22).

14. Dispositif selon la revendication 13, caractérisé par le fait que le mélangeur (25) est pourvu d'une zone de chauffage et de refroidissement (47), et de préférence de plusieurs, qui sont reliées à l'unité de commande (22).

15. Dispositif selon l'une des revendications 8 à 14, caractérisé par le fait qu'un dispositif de contrôle du vide (48) est raccordé au carter (12) de la vis sans fin (13) dans la région du dispositif de dégazage (17) (figure 2).
